# EUROPÄISCHE PATENTSCHRIFT

(11) **EP 3 325 423 B1**
(45) Veröffentlichungstag und Bekanntmachung des Hinweises auf die Patenterteilung: **19.02.2020**
(21) Anmeldenummer: 16736117.9
(22) Anmeldetag: 06.07.2016
(51) Int. Cl.: C04B 24/08, C04B 24/32, C04B 28/02, C04B 20/10, C04B 103/56, C04B 111/60, C04B 111/70

(54) **NEUARTIGE SCHWINDREDUZIERER FÜR MINERALISCHE BINDEMITTEL**
NOVEL SHRINKAGE REDUCER FOR MINERAL BINDING AGENTS
NOUVEAU REDUCTEUR POUR LIANT MINERAL

(30) Priorität: 20.07.2015 EP 15177467
(43) Veröffentlichungstag der Anmeldung: 30.05.2018
(73) Patentinhaber: Evonik Operations GmbH, 45128 Essen (DE); Sika Technology AG, 6340 Baar (CH)
(72) Erfinder: SCHUBERT, Frank, 47506 Neukirchen-Vluyn (DE); REINSCHMIDT, Anke, 45326 Essen (DE); VETTER, Andreas, 45355 Essen (DE); KRUCZEK, Sabin, 45276 Essen (DE); HONERT, Dieter, Jiangsu 215021 (CN); MÜLLER, Thomas, 69115 Heidelberg (DE); KÖNIG, Inna, 69250 Schönau (DE); BLASK, Oliver, 68723 Oftersheim (DE); EBERHARDT, Arnd, 8400 Winterthur (CH)
(74) Vertreter: Evonik Patent Association
(86) Internationale Anmeldenummer: PCT/EP2016/065939
(87) Internationale Veröffentlichungsnummer: WO 2017/012873

(56) Entgegenhaltungen:
- EP-A1- 2 508 572
- EP-A1- 2 522 642
- WO-A1-2010/069897
- DE-A1- 3 401 813
- GB-A- 1 119 897
- US-A- 4 547 223

## Beschreibung

Gegenstand der Erfindung sind Carbonsäure-stämmige Polyoxyalkylene als neuartige emissionsarme schwindreduzierende Mittel für mineralische Bindemittel, insbesondere zementöse Bindemittel, und daraus hergestellte Baustoffe, z.B. Mörtel, Estriche, Betone und Schlämme.

Es ist dem Fachmann seit langem bekannt, dass mineralische Bindemittel, insbesondere zementöse Bindemittel während des Abbindungs- und Trocknungsprozesses einer Volumenkontraktion unterliegen. Dieses Schwinden ist für die Gebrauchstauglichkeit, dauerhafte Haltbarkeit und Festigkeit des gehärteten Baustoffs von größter Bedeutung, denn es ist häufig die Ursache für die Entstehung von Rissen, für das Aufschüsseln von Estrichen und weiterer Schäden. So gelangen z.B. Wasser, gelöste Salze und Luft durch Risse ins Innere des Betons, Mörtels, Estrichs oder der Schlämme und begünstigen zum Beispiel die Korrosion in Stahlbetonkonstruktionen. Femer führt die Wechselbeanspruchung von Frost und Auftauen bei ungewünschtem Eindringen von Wasser in den Baustoff zu mechanischen Spannungen und einem vorzeitigen Materialversagen.

Die Bauindustrie ist daher bestrebt, durch unterschiedlichste Maßnahmen das Schwinden auf ein Minimum zu begrenzen. Nicht nur durch die Art der Bauausführung und Wahl optimierter zementöser Bindemittelkompositionen, sondern in letzter Zeit verstärkt durch den Zusatz organischer Additive wird versucht, dem Schwinden entgegen zu wirken. Anfang der 1980er Jahre wurden in Japan die ersten Schwindreduzierer entwickelt und erfolgreich eingesetzt (P. Schäffel, Betontechnische Berichte 2007-2009, S. 19-37). Die Verwendung von verschiedenen Schwindreduzierern als Zusatzmittel hat sich seitdem weit verbreitet und war auch Gegenstand wissenschaftlicher Untersuchungen zum Wirkmechanismus (P. Schäffel, Dissertation Universität Weimar, 2009).

Der Stand der Technik kennt diverse Typen von Glykolen und Polyoxyalkylenen, die als Schwindreduzierer eingesetzt werden. So offenbart z.B. die US 4,547,223 die Verwendung von Polyoxyalkylenen, die ausgehend von einem Alkanol mit 1 bis 7 C-Atomen oder einer OHfunktionellen cycloaliphatischen Verbindung mit 5 oder 6 C-Atomen ausgeht und 1 bis 10 Monomereinheiten aus Ethylenoxid und/oder Propylenoxid enthält. Die GB 2305428 beschreibt die schwindreduzierende Wirkung von verschiedenen Glykolen wie 2-Methyl-2,4-pentandiol und daraus hergestellte Alkoxylierungsprodukte mit2-10 Einheiten Ethylenoxid und/oder Propylenoxid. Die EP 1024120 setzt hingegen auf bestimmte Alkanolamine wie N-Propylaminopropanol oder N-Butylaminopropanol. Polyethylenglykole mit Molmassen zwischen 400 und 8 000 g/mol werden in der JP 2011246286 als Schwindreduzierer beansprucht, während in der CN 100347139 Fettalkoholethoxylate aus C₁₂-C₁₈-Fettalkoholen mit 15 bis 17 Ethylenoxy-Einheiten beschrieben werden. Polyoxyalkylene, die sich von Polyolen mit mindestens drei OH-Gruppen ableiten und zwischen 30 und 50 Oxyalkyleneinheiten pro OH-Gruppe aufweisen, werden in der JP 2010229015 zur Schwindreduktion in hydraulischen Bindemitteln verwendet. Mehrere Schutzrechte befassen sich mit dem Einsatz von Butanol-basierenden Polyoxyalkylenen, z.B. die Schrift JP 2004091259 (1 bis 20 Oxyethylen- oder Oxypropylen-Einheiten) und CN 102020432 mit ausschließlich Oxypropylen-Einheiten.

Darüber hinaus ist bekannt, Glykole und Polyoxyalkylene in pulverförmiger, zumeist geträgerter Form zementösen Systemen hinzuzufügen. Das in JP 2011184236 dargelegte Verfahren basiert darauf, ein Polyoxyalkylen mit 1 bis 100 Oxyalkyleneinheiten, die an ein Alkanol mit 1 bis 8 C-Atomen gebunden sind, auf ein anorganisches pulverförmiges Trägermaterial aufzubringen. So werden z.B. 80 g Wirkstoff auf 160 g Trägermaterial durch Absorption in eine feste Applikationsform überführt.

Alle diese Schwindreduzierer weisen ein oder mehrere Nachteile auf. Sie sind aufgrund der hohen Dosierung und/oder ihres Herstellungspreises unwirtschaftlich, sie stören wegen ihrer Oberflächenaktivität die Wirkung von Luftporenbildnem, sie können wegen ihrer Brennbarkeit/Flammpunkt nicht sinnvoll auf Baustellen eingesetzt werden oder sie verzögern die Festigkeitsentwicklung der zementösen Systeme.

Ein weiteres bisher ungelöstes Problem der bisher bekannten organischen Schwindreduzierer stellt deren Dampfdruck dar. Während und nach der großflächigen Verarbeitung wie beispielsweise in Estrichen kommt es zum Ausgasen der flüchtigen Stoffe. Herkömmliche Schwindreduzierer stellen somit Volatile Organic Compounds (VOC) dar. Sie tragen bei Anwendung in Wohngebäuden zu einer Belastung der Atemluft bei, was ähnlich wie bei Teppichen, Möbeln und Kunststoffen immer wenigertoleriert wird. Insbesondere niedermolekulare Glykole und Polyoxyalkylene, aber auch solche Polyoxyalkylene, die auf Grund ihres Herstellprozesses eine breite Molmassenverteilung mit niedermolekularen Anteilen aufweisen bzw. niedermolekulare Nebenprodukte enthalten, können Quellen für VOC darstellen. Ein permanentes langsames Ausgasen aus dem Baustoff kann gegebenenfalls langfristig die mechanischen Eigenschaften des Baustoffs beeinträchtigen.

Auf Grund der potentiell gesundheitsschädlichen Wirkung von flüchtigen organischen Verbindungen in der Raumluft werden etwa Fußbodenbeläge und Bodenbelagsklebstoffe seit Jahren nach definierten Prüfverfahren getestet und besonders emissionsarme Materialien mit Gütesiegeln ausgezeichnet. Materialien, die z.B. die strengen Kriterien des EMICODE EC1 und des Blauen Engels erfüllen, stellen ganz besonders emissionsarme Produkte dar. Immer mehr in den Fokus geraten in letzter Zeit in Innenräumen verlegte Estriche, die mit ihren organischen Zusatzmitteln ebenfalls mögliche VOC-Quellen darstellen. Bisher sind keine organischen Schwindreduziererfür hydraulische Bindemittel bekannt, welche bei üblichen Konzentrationen z.B. die Anforderungen gemäß EMICODE EC1 oder ähnlicher Prüfnormen erfüllen.

Es ist daher Aufgabe der vorliegenden Erfindung, ein emissionsarmes und praktisch VOC-freies schwindreduzierendes Mittel für hydraulische Bindemittel bereit zu stellen. Insbesondere war es Aufgabe, solche Schwindreduzierer bereit zu stellen, die die Kriterien des Ausschusses zur gesundheitlichen Bewertung von Bauprodukten (AgBB) mit Stand vom Februar 2015 erfüllen.

Aufgabe der vorliegenden Erfindung ist weiterhin, mit Schwindreduzierem hergestellte Baustoffe bereit zu stellen, die die AgBB-Kriterien TVOC₃ ≤ 10 mg/m³, TVOC₂₈ ≤ 1,0 mg/m³ und SVOC₂₈ ≤ 0,1 mg/m³ erfüllen und damit für die Verwendung ganz besonders auch in Innenräumen besonders geeignet sind. (TVOC = Total Volatile Organic Compounds) am 3. bzw. 28. Tag, SVOC = schwerflüchtige organische Verbindungen am 28. Tag.

Die erfindungsgemäßen Schwindreduzierer sollen dabei sowohl in flüssiger Form (pur oder verdünnt) als auch in fester, beispielsweise in geträgerter, Form hergestellt und eingesetzt werden können, um bei der Applikation eine maximale Flexibilität zu ermöglichen. Dabei können die Schwindreduzierer auch als Bestandteil einer Produktformulierung mit weiteren Substanzen eingesetzt werden.

Es ist femer Aufgabe der vorliegenden Erfindung, eine neue Klasse von Schwindreduzierem bereit zu stellen, die nicht nur emissionsarm im Sinne der vorgenannten Definition, kostengünstig herstellbar und leicht verarbeitbar sind, sondern eine mindestens so gute schwindreduzierende Wirkung entfalten, wie sie von den nach Stand der Technik bekannten Produkten erreicht wird. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben, auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Überraschend wurde gefunden, dass sich bestimmte Polyoxyalkylene, die eine oder mehrere Carboxygruppen in der Polymerkette und eine oder mehrere terminale Hydroxylgruppen aufweisen, hervorragend als emissionsarme Schwindreduzierer eignen. Derartige Polyoxyalkylene lassen sich sowohl flüssig als auch fest, gewünschtenfalls geträgert auf einem anorganischen absorbierenden Substrat, vielseitig z.B. in Mörteln, Zement und Betonen oder Schlämmen einsetzen und zeigen in solchen mineralischen Bindemittelzusammensetzungen eine ausgezeichnete schwindreduzierende Wirkung. Untersuchungen nach DIN 52450 belegen, dass Zementfließestriche, die die erfindungsgemäßen Schwindreduzierer enthalten, ein sehr geringes Schwinden von weniger als 0,4 mm pro m nach 14 Tagen aufweisen.

Emissionsarm und VOC-frei im Sinne der vorliegenden Erfindung sind solche Schwindreduzierer, die die Kriterien des Ausschusses zur gesundheitlichen Bewertung von Bauprodukten (AgBB) mit Stand vom Februar 2015 erfüllen. Dem Fachmann sind diese Kriterien bekannt. Das Bundesumweltamt hat diese auf seiner website veröffentlicht:
http://www.umweltbundesamt.de/sites/default/files/medien/355/dokumente/agbb-bewertungsschema_2015_2.pdf.

Diese erfindungsgemäßen Schwindreduzierer stellen keine Volatile Organic Compounds (VOC) dar. Sie enthalten auch keine Inhaltsstoffe oder Nebenprodukte, die ihrerseits als VOC einzustufen wären. Die damit hergestellten Estriche und anderen Baustoffe sind somit ebenfalls praktisch frei von ungewünschten VOC und erfüllen die AgBB Kriterien.

Es existiert keine einheitliche Definition des Begriffs VOC und dementsprechend unterschiedlich sind die analytischen Bestimmungsverfahren. Weit verbreitet ist die VOC-Definition, die sich von der Flüchtigkeit (Siedepunkt) eines Stoffs oder Stoffgemischs ableitet. Der Begriff VOC beschreibt danach einen Stoff mit einem Siedepunkt von kleiner oder gleich 250 °C. VOC-Schnelltests mit Hilfe einer GC-basierenden Messmethode sind besonders bei hohem Probenaufkommen sehr gut geeignet und erlauben eine rasche und aussagekräftige Charakterisierung des Emissionsverhaltens und Vergleiche von Proben untereinander. VOC-Messungen nach einer GC-Methode gegen Tetradecan als Standard belegen, dass die erfindungsgemäßen Schwindreduzierer keine VOC darstellen und der Anteil an flüchtigen Inhaltsstoffen extrem niedrig ist. Konventionelle Schwindreduzierer wie Neopentylglykol und Hexylenglykol sind hingegen zu 100 % VOC.

Diese Ergebnisse finden Bestätigung in aufwändigen 28-tägigen Prüfkammerverfahren, in denen die Emissionseigenschaften von Mörteln, welche die erfindungsgemäßen Polyoxyalkylene als Zusatzmittel enthalten, untersucht wurden. In Anlehnung an die GEV (Gemeinschaft Emissionskontrollierte Verlegewerkstoffe, Klebstoffe und Bauprodukte e. V.) Prüfmethode (Stand 15.4.2013) wurden frisch zubereitete Mörtelproben in großvolumigen Prüfkammem, in denen bei 23 °C ein definiertes Innenraumklima nachempfunden wurde, kontinuierlich mit sauberer Luft gespült und die Kammerluft in bestimmten Intervallen ausgetauscht. Im Abstand mehrerer Tage wurden Luftproben aus der Prüfkammer entnommen und die flüchtigen organischen Inhaltsstoffe per GC-MS und HPLC identifiziert und summiert. Die mit Schwindreduzierem der nachfolgenden Formel (I) ausgestatteten Bindemittelkompositionen erweisen sich in solchen Tests als extrem emissionsarm im Vergleich zu den untersuchten Zusatzmitteln des Stands der Technik.
Ein weiterer Vorteil der erfindungsgemäßen Verbindungen ist, dass sie leicht zu verarbeiten sind. In Bezug auf die Abbindegeschwindigkeit und mechanischen Kennwerte des ausgehärteten Bindemittelsystems erweisen sich die erfindungsgemäßen Polyoxyalkylene überraschenderweise neutral.
Ein weiterer großer Vorteil des emissionsarmen Schwindreduzierers der nachfolgenden Formel (I) ist auch, dass bei deren Einsatz zementäre Estriche die gleichen Eigenschaften aufweisen wie gipsbasierte Estriche, nämlich dass sie emissionsarm sind und kein Schwinden aufweisen, bei gleichzeitig besseren mechanischen Festigkeiten und höherer Beständigkeit gegen Wasser.

### Zusammensetzung der erfindungsgemäßen, emissionsarmen Schwindreduzierer:

Gegenstand der vorliegenden Erfindung ist somit die Verwendung von Polyoxyalkylenen der Formel (I) als schwindreduzierende Mittel (Schwindreduzierer) für mineralische Bindemittel und daraus hergestellte Baustoffe, 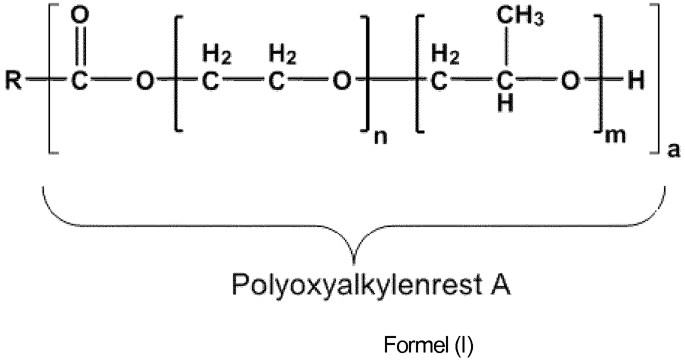 wobei
- R: ein a-valenter, linearer oder verzweigter, gesättigter, einfach oder mehrfach ungesättigter aliphatischer, cycloaliphatischer oder aromatischer Kohlenwasserstoffrest mit 3 bis 38 Kohlenstoffatomen, bevorzugt mit 5 bis 17 Kohlenstoffatomen ist, wobei die Kohlenwasserstoffkette mit a Polyoxyalkylenresten A, bei linearen Kohlenwasserstoffketten bevorzugt terminal (also an einem oder beiden Enden der linearen Kohlenwasserstoffkette), substituiert ist, wobei substituiert vorliegend bedeutet, dass jeweils ein Wasserstoffatom des Kohlenwasserstoffrestes R durch einen Polyoxyalkylenrest A ersetzt wird, bevorzugt ist R ein linearer oder verzweigter, gesättigter, einfach oder mehrfach ungesättigter aliphatischer, Kohlenwasserstoffrest mit 3 bis 38 Kohlenstoffatomen, bevorzugt mit 5 bis 17 Kohlenstoffatomen, wobei die Kohlenwasserstoffkette mit 1 oder 2 (a = 1 oder 2), bevorzugt mit 1, Polyoxyalkylenresten A terminal substituiert ist, besonders bevorzugt ist R ein linearer gesättigter oder ungesättigter aliphatischer, Kohlenwasserstoffrest mit 5 bis 17 Kohlenstoffatomen, wobei die Kohlenwasserstoffkette mit einem Polyoxyalkylenrest A (a = 1) terminal substituiert ist,
- a: = 1 bis 4, bevorzugt kleiner als 3, weiter bevorzugt 1 bis 2, besonders bevorzugt 1,
- n: = 0 bis 40, bevorzugt 2 bis 30, besonders bevorzugt 4 bis 20,
- m: = 0 bis 40, bevorzugt 2 bis 30, besonders bevorzugt 4 bis 20 ist,
mit der Maßgabe, dass
die Summe aus n und m = 4 bis 80, bevorzugt von 6 bis 40, besonders bevorzugt 8 bis 20 ist, wobei die mit n und m bezeichneten Einheiten wahlweise blockartig oder statistisch in der Polyetherkette verteilt sind und die mit n und m bezeichneten Einheiten die Mittelwerte der möglichen statistischen Verteilung der tatsächlichen vorhandenen Strukturen darstellen.

Der Polyoxyalklenrest A entspricht dem Fragment mit dem Index a in Formel (I).

Schwindreduzierer der Formel (I) zeichnen sich insbesondere dadurch aus, dass sie emissionsarm sind und die zuvor genannten AgBB Kriterien erfüllen.

Schwindreduzierende Mittel im Sinne dieser Erfindung sind organische Verbindungen, die das Schwinden von hydraulischen Bindemitteln reduzieren. Das Schwinden tritt während des Trocknungsvorgangs durch einen entstehenden Kapillarunterdruck als Folge des internen chemischen Schwindens oder bei sehr niedriger äußerer Luftfeuchtigkeit auf. Durch die Verwendung eines Schwindreduzierers werden die Spannungen reduziert und eine Rissbildung verhindert oder begrenzt. Funktion und Wirkungsweise sind in der Literatur vielfach und detailliert beschrieben (Eberhardt 2011; "On the mechanisms of shrinkage reducing admixtures in self consolidating mortars and concretes"; ISBN 978-3-8440-0027-6).

Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinanderfolgen können.

Bevorzugt ist die Verwendung von Polyoxyalkylenen der Formel (I), wobei der Rest R unabhängig voneinander ein aliphatischer Kohlenwasserstoffrest mit 3 bis 38 Kohlenstoffatomen, bevorzugt mit 5 bis 17 Kohlenstoffatomen ist, wobei die Kohlenstoffkette mit 1 oder 2 Polyoxyalkylenresten A terminal substituiert ist und damit a gleich der Anzahl der Polyoxyalkylenreste A gleich 1 oder 2 ist, besonders bevorzugt der Rest R verzweigt mit 5 bis 17 Kohlenstoffatomen und der Index a gleich 1 ist.

Die Polyoxyalkylene der Formel (I) können durch eine Alkoxylierungsreaktion von Carbonsäuren der Formel (II) 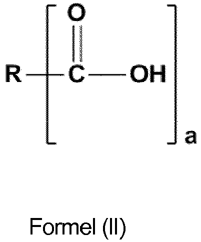 mit
R der a-valente Rest einer organischen Carbonsäure, wie in Formel (I) definiert,
mit Alkylenoxiden wie Ethylenoxid und/oder Propylenoxid hergestellt werden.

Bevorzugte Reste R für Formel (I) und Formel (II) sind solche, die sich aus Verbindungen der Gruppe der ein- oder mehrwertigen Carbonsäuren, der aromatischen Carbonsäuren oder der cycloaliphatischen Carbonsäuren ableiten. Besonders bevorzugt sind die Reste R, die sich von einer Fettsäure oder Dimerfettsäure ableiten. Insbesondere bevorzugt sind die Reste R, die sich ableiten von Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Icosansäure, 2-Ethylhexancarbonsäure, Isononansäure, 3,5,5-Trimethylhexancarbonsäure, Neodecansäure, Isotridecancarbonsäure, Isostearinsäure, Undecylensäure, Ölsäure, Linolsäure, Ricinolsäure, Linolensäure, Benzoesäure, Zimtsäure, Phthalsäure, Isophthalsäure, Terephthalsäure, Cyclohexancarbonsäure, Hexahydrophthalsäure, Tetrahydrophtalsäure, Methyltetrahydrophthalsäure oder die sich von den vorab genannten ungesättigten Carbonsäuren ableitenden Dimerfettsäuren. Aus der vorgenannten Gruppe sind weiterhin die Reste R besonders bevorzugt, die sich ableiten von Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Icosansäure, 2-Ethylhexancarbonsäure, Isononansäure, 3,5,5-Trimethylhexancarbonsäure, Neodecansäure, Isotridecancarbonsäure, Isostearinsäure, Undecylensäure, Ölsäure, Linolsäure, Ricinolsäure, Linolensäure oder die sich von den vorab genannten ungesättigten Carbonsäuren ableitenden Dimerfettsäuren, ganz besonders bevorzugt Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Icosansäure, 2-Ethylhexancarbonsäure, Isononansäure, 3,5,5-Trimethylhexancarbonsäure, Neodecansäure, Isotridecancarbonsäure, Isostearinsäure, Undecylensäure, Ölsäure, Linolsäure, Ricinolsäure oder Linolensäure und insbesondere bevorzugt Isononansäure, 3,5,5-Trimethylhexancarbonsäure, Neodecansäure, Isotridecancarbonsäure, Ölsäure.

Polyoxyalkylene der Formel (I), deren Reste R sich von den vorgenannten Carbonsäuren ableiten, eignen sich besonders hervorragend als Schwindreduzierer, weisen besonders gute Eigenschaften bezüglich der Verarbeitbarkeit auf und erzielen bei Einsatz als Schwindreduzierer Baumaterialien mit den gewünschten Eigenschaften.

Darüber hinaus können auch aromatische Carbonsäuren der Formel (II) verwendet werden wie z.B. Benzoesäure, Zimtsäure, Phthalsäure, Isophthalsäure, Terephthalsäure oder cycloaliphatische Carbonsäuren wie Cyclohexancarbonsäure, Hexahydrophthalsäure, Tetrahydrophtalsäure oder Methyltetrahydrophthalsäure.

Die hier betrachteten Polyoxyalkylene sind Polyetheralkohole, oft auch kurz als Polyether oder Polyetherole bezeichnet. Im Stand der Technik sind diverse Schriften bekannt, in denen Alkohole, Carbonsäuren oder Amine als Startverbindungen für die Alkoxylierungsreaktion eingesetzt werden. Einen guten Überblick über Polyoxyalkylene und Verfahren zur Herstellung von Polyoxyalkylenen bietet "N. Schönfeldt, Surface Active Ethylene Oxide Adducts, Pergamon Press, 1969".

Die erfindungsgemäßen Polyoxyalkylene weisen bevorzugt eine gewichtsmittlere Molmasse von 300 bis 15.000 g/mol, weiter bevorzugt von 400 bis 5.000 g/mol und besonders bevorzugt von 500 bis 2.500 g/mol auf.

Besonders bevorzugt sind die erfindungsgemäßen Polyoxyalkylene mit n = 0 bis 20, m = 0 bis 20 und einer Summe m + n = 6 bis 20.

Insbesondere bevorzugt sind die erfindungsgemäßen Polyoxyalkylene mit R gleich einem einwertigen (a = 1) verzweigten Kohlenwasserstoffrest mit 5 bis 17 Kohlenstoffatomen und mit n = 0 bis 20, m = 0 bis 20 und einer Summe m + n = 6 bis 20.

Die erfindungsgemäßen Verbindungen, die als Schwindreduzierer verwendet werden, umfassen bevorzugt auch Polyoxyalkylene, die aus Mischungen von verschiedenen Carbonsäuren, z.B. Mischungen unterschiedlicher nativer Fettsäuren sowie Mischungen aus Monomer-/Dimer-/Trimerfettsäuren hervorgegangen sind. Für den Fall, dass mehrere Startverbindungen als Gemisch verwendet werden, kann der Index a auch einer statistischen Verteilung unterliegen.

Die erfindungsgemäßen Polyoxyalkylene sind vorzugsweise farblose bis gelb-orange Produkte, die klar oder opak sein können. Je nach Aufbau der Polyoxyalkylenkette sind die Produkte entweder bei Raumtemperatur flüssig, wachsartig oder fest. Bevorzugt sind flüssige und niedrig viskose Produkte mit weniger als 1 000 mPas (25 °C).

Die erfindungsgemäßen emissionsarmen Schwindreduzierer der Formel (I) können nach den im Stand der Technik bekannten Verfahren hergestellt werden, vorzugsweise werden sie nach dem folgenden Verfahren hergestellt: Im ersten Schritt wird eine Startverbindung der Formel (II) katalytisch mit Ethylenoxid, Propylenoxid oder beliebigen Mischungen dieser Epoxide umgesetzt. In einem optionalen zweiten Schritt werden Restmonomere in einer Vakuumdestillation entfernt und das Reaktionsprodukt mit einer Säure wie Milchsäure, Essigsäure, Propionsäure oder Phosphorsäure neutralisiert und die entstandenen Salze gegebenenfalls durch Filtration entfernt.

Unter Startverbindungen werden im Rahmen der vorliegenden Erfindung Substanzen verstanden, die den Anfang (Start) des herzustellenden Polyoxyalkylens bilden, das durch die Anlagerung von Alkylenoxiden erhalten wird.

Die Epoxidmonomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt. Die Zusammenhänge zwischen Dosierung und Produktstruktur sind dem Fachmann bekannt.

Als Katalysator für die Alkoxylierungsreaktion werden die dem Fachmann bekannten alkalischen Katalysatoren wie Kaliumhydroxid, Kalilauge, Natriummethanolat oder Kaliummethanolat verwendet. Startverbindung und Katalysator werden am Anfang des Prozesses vor der Alkylenoxiddosage im Reaktor vorgelegt, wobei die Katalysatormenge so einzustellen ist, dass eine ausreichende katalytische Aktivität für das Verfahren gegeben ist. Die Reaktionstemperatur des ersten Schrittes liegt vorzugweise bei 80 bis 220 C, besonders bevorzugt bei 100 bis 180 C. Der Druck des ersten Schrittes beträgt dabei bevorzugt 0,5 bar bis 20 bar, bevorzugt 1,0 bis 12 bar (absolut).

Nach Beendigung der Epoxidaddition folgt vorzugsweise eine Nachreaktion zur Vervollständigung des Umsatzes. Die Nachreaktion kann z. B. durch Weiterreaktion bei Reaktionsbedingungen (also Beibehaltung z.B. der Temperatur und des Druckes) ohne Zugabe von Edukten durchgeführt werden. Vorzugsweise erfolgt die Nachreaktion unter Durchmischung des Reaktionsgemisches, insbesondere unter Rühren.

Nicht abreagierte Epoxide und eventuell weitere flüchtige Bestandteile können direkt am Ende des ersten Schrittes z.B. durch Vakuumdestillation, Wasserdampf- oder Gasstrippen oder andere Methoden der Desodorierung entfernt werden.

Als Reaktoren für die Alkoxylierung im ersten Verfahrensschritt können prinzipiell alle geeigneten Reaktortypen zum Einsatz kommen, die die Reaktion und ihre Wärmetönung beherrschen lassen. Der erste Verfahrensschritt kann in verfahrenstechnisch bekannter Art und Weise kontinuierlich, semi-kontinuierlich oder auch batchweise erfolgen.

### Verwendung der emissionsarmen Schwindreduzierer:

Ein weiterer Gegenstand der vorliegenden Erfindung ist ein Verfahren zur Schwindreduktion von Baustoffen, die mineralische Bindemittel, insbesondere zementöse Bindemittel, enthalten. Bei den Baustoffen handelt es sich bevorzugt um Mörtel, Estrich, Beton oder Schlämmen. Im Rahmen des Verfahrens wir einem nicht gehärteten bzw. abgebundenen Baustoffgemisch mindestens ein Polyoxyalkylen der Formel (I), wie vorstehend beschrieben, zugegeben. Bei dem mineralischen Bindemittel handelt es sich bevorzugt um ein hydraulisches Bindemittel, besonders bevorzugt um einen Zement gemäß Euronorm EN 197 in reiner Form oder als Abmischung mit latent hydraulischen Bindemitteln, bevorzugt Flugasche, Hochofenschlacke, Ölschieferabbrand, natürliche Puzzolane oder Silica Fume oder inerten Füllstoffen wie Steinmehl. Im Rahmen des beschriebenen Verfahrens ist es weiterhin bevorzugt, wenn das mindestens eine Polyoxyalkylen der Formel (I), dem nicht gehärteten Baustoffgemisch in einer Menge von 0,001 - 6,0 %, bevorzugt in einer Menge von 1 bis 3 Gew.-% bezogen auf das Trockengewicht des Bindemittels zugegeben wird. Die Bezeichnung "nicht gehärtetes Baustoffgemisch", ist in diesem Zusammenhang so aufzufassen, dass das Gemisch zum Zeitpunkt der Zugabe nicht notwendigerweise alle Bestandteile des späteren Baustoffs enthält, d.h. es ist zum Beispiel möglich, dass nach der Zugabe des mindestens einen Polyoxyalkylens der Formel (I) weitere für den gewünschten Baustoff erforderliche Inhaltsstoffe wie Wasser oder Gesteinskömung zugegeben werden. Die Bezeichnung "nicht gehärtet" ist so aufzufassen, dass das mineralische Bindemittel in nicht abgebundener oder zumindest nicht vollständig abgebundener Form vorliegt, so dass das Gemisch fließfähig und vorzugsweise pumpbar ist.

Das Polyoxyalkylen gemäß Formel (I) kann dabei sowohl flüssig, als Pulver, beispielweise geträgert, dispergiert bzw. emulgiert in Wasser und/oder einem nicht-wässrigen Lösungsmittel oder gelöst in Wasser und/oder einem nicht-wässrigen Lösungsmittel eingesetzt werden. Wahlweise kann der Polyoxyalkylen gemäß Formel (I) in mindestens einem hydraulischen Bindemittel vorgemischt werden oder in trockenem Mörtel oder Beton zur Anwendung gelangen. Die Zumischung des Polyoxyalkylens der Formel (I) in das Bindemittel kann bei der Herstellung des Bindemittels im Werk, vor, während oder nach dem Mahlen erfolgen.

Bei der Trägerung werden ein oder mehrere erfindungsgemäße Polyoxyalkylene der Formel (I) auf einem Träger absorbiert, verkapselt oder adsorbiert oder gemischt mit einem Trägermaterial, wobei das Trägermaterial ausgewählt sein kann aus anorganischen oder organischen Materialen oder deren Mischungen, vorzugsweise Kieselsäuren, Aluminiumoxid, Sand, Zement, vulkanisches Gestein, beispielsweise Basalt oder Bims, Flugasche, Bentonite, Xonolithe oder Kalk oder Stärke, Cellulose, Holzgranulate oder Proteine, Kunststoffgranulate, besonders bevorzugt werden unter Kostengesichtspunkten anorganische Trägermaterialien eingesetzt. Mehr besonders bevorzugte Trägermaterialien sind Kieselsäuren, Aluminiumoxid und Bims, insbesondere bevorzugt sind Kieselsäuren.

Es kann zweckmäßig sein, wenn das mindestens eine Polyoxalkylen der Formel (I), das mineralische Bindemittel, Zusatzmittel, Zusatzstoffe und/oder Gesteinskömung zunächst ohne Zugabe von Wasser zu vermischen und der so erhaltenen Vormischung erst zu einem späteren Zeitpunkt Wasser zuzugeben. Alternativ ist es jedoch auch möglich, die Einzelkomponenten, d.h. das mindestens eine Polyoxalkylen der Formel (I), das mineralische Bindemittel, Zusatzmittel, Zusatzstoffe und/oder Gesteinskömung direkt mit Wasser zu vermischen. Darüber hinaus kann das mindestens eine Polyoxalkylen der Formel (I) während des Herstellungs- oder Förderprozesses des Baustoffs mit dem mineralischen Bindemittel und/oder dem Gesteinsmehl vermischt werden. Dazu kann das mindestens eine Polyoxalkylen der Formel (I) beispielsweise dem trockenen oder mit Wasser angemachten Bindemittel, Mörtel oder Beton im Werk, auf der Baustelle, im Mischer, in der Förderpumpe oder über einen statischen Mischer mit einem Pulverdosiergerät oder einem Flüssigdosiergerät direkt in die Mischung zugegeben werden.

Vorliegend wird als "Baustoff" eine Mixtur, bestehend aus einem oder mehreren mineralischen Bindemitteln und Wasser, bevorzugt aus einem oder mehreren mineralischen Bindemitteln, Gesteinskörnung und Wasser bezeichnet. Bei dem Baustoff handelt es sich besonders bevorzugt um einen Beton, Mörtel, Estrich oder Schlämme. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Hüttensand), ein puzzolanisches Bindemittel (z.B. Flugasche), ein nicht hydraulisches Bindemittel (z.B. Gips, Weißkalk) oder eine Mischung zweier oder mehrerer dieser Bindemittel umfassen. Unter "Zement" oder "zementöses Bindemittel" wird vorwiegend ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-% Zementklinker verstanden. Der Zementklinker ist bevorzugt ein Portlandzementklinker. Die vorliegende Erfindung ist beispielsweise für Zemente gemäß der Norm EN 197-1 geeignet, insbesondere für Zement vom Typ CEM I, CEM II, CEM III, CEM IV und/oder CEM V. Natürlich eignen sich auch Zementtypen, die bezüglich einer anderen Norm oder nicht klassifiziert sind (z. B. Tonerdeschmelzzement, Calciumsulphoaluminatzement, Belitzement, Geopolymere, und deren Abmischungen).

Neben dem erfindungsgemäßen mindestens einen Polyoxalkylen der Formel (I) kann der Baustoff bzw. das vorstehend erwähnte Baustoffgemisch übliche Zusatzmittel enthalten. Beispiele sind Betonverflüssiger, Fließmittel, Korrosionsinhibitoren, Entschäumer, Luftporenbildner, Polymerdispersionen, Beschleuniger, Verzögerer, Stabilisierer Viskositätsmodifizierer, Redispersionspulver, Wasserretentionsmittel, Fasern (z.B. Stahl- oder Kunststofffasem), Dichtungsmittel. Des Weiteren kann der Baustoff bzw. das Baustoffgemisch übliche Zusatzstoffe enthalten, z.B. Flugasche, Hüttensand, Gesteinsmehl (z.B. Quarz-/ Kalksteinmehl), Fasern (z.B. Stahl- oder Kunststofffasem), Pigmente, Trass, Polymerdispersion. Weiterhin kann der Baustoff bzw. das Baustoffgemisch Gesteinskömung, wie z.B. Sand, Kies, Splitt und/oder Steine enthalten. Dabei ist es unerheblich, ob mineralische Bindemittel, Zusatzmittel, Zusatzstoffe, Gesteinskömung, etc. als "Trockenmischung" vorgemischt werden und diese zu einem späteren Zeitpunkt mit Wasser vermengt wird oder die Einzelkomponenten zusammen mit Wasser gemischt werden.

Ein weiterer Aspekt der vorliegenden Erfindung betrifft eine Baustoffzusammensetzung, die
i) mindestens ein mineralisches Bindemittel, bevorzugt ein zementöses Bindemittel, und
ii) mindestens ein Polyoxyalkylen der Formel (I), wie vorstehend beschrieben, enthält. Für bevorzugte Ausführungsformen hinsichtlich der Ausgestaltung des mindestens einen Polyoxyalkylens der Formel (I), dessen Gehalt in der Zusammensetzung sowie weiteren Inhaltsstoffe der Baustoffzusammensetzung sei auf die vorstehenden Angaben einschließlich der Angaben zu Baustoffen und Baustoffgemischen verwiesen, die analog auf erfindungsgemäße Baustoffzusammensetzung übertragbar sind.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Die erfindungsgemäßen emissionsarmen Polyoxyalkylene, das Verfahren zu ihrer Herstellung sowie die erfindungsgemäße Verwendung als Schwindreduzierer werden nachfolgend beispielhaft beschrieben, ohne dass die Erfindung auf diese beispielhaften Ausführungsformen beschränkt sein soll.

### Beispiele:

### GPC-Messungen:

GPC-Messungen zur Bestimmung der Polydispersität und mittleren Molmassen Mwwurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung der OH-Zahl:

Hydroxylzahlen wurden nach der Methode DGF C-V 17 a (53) der Deutschen Gesellschaft für Fettwissenschaft bestimmt. Dabei wurden die Proben mit Essigsäureanhydrid in Gegenwart von Pyridin acetyliert und der Verbrauch an Essigsäureanhydrid durch Titration mit 0,5 n Kalilauge in Ethanol gegen Phenolphthalein bestimmt.

### Bestimmung der Viskosität

Die Viskositäten wurden in Anlehnung an die DIN 53019 mit einem Rotationsviskosimeter der Marke Haake RV12 bei 25°C gemessen.

### Bestimmung des VOC-Gehalts:

### a) Prüfkammerversuche

Prüfkammerversuche wurden in Anlehnung an die Prüfmethode "Bestimmung flüchtiger organischer Verbindungen zur Charakterisierung emissionskontrollierter Verlegewerkstoffe, Klebstoffe, Bauprodukte und Parkettlacke" der Gemeinschaft Emissionskontrollierte Verlegewerkstoffe, Klebstoffe und Bauprodukte e. V. (GEV) mit Stand vom 15.4.2013 durchgeführt. Mörtelproben, die den jeweiligen Schwindreduzierer enthielten, wurden mit Wasser angerührt, in eine Metallschale gefüllt und in eine 30 I-Prüfkammer gestellt. Die Lagerung erfolgte bei 23 °C, 50 % rel. Luftfeuchte und einem Luftwechsel von 0,5 pro Stunde. Nach 3, 10 und 28 Tagen wurden jeweils zwei Proben aus dem Gasraum der Prüfkammer gezogen: Eine Probe für die Analyse der Emissionen mit GC-MS (Tenax), die andere Probe zur Bestimmung von Aldehyden mittels HPLC (DNPH).

### b) Schnellmethode mittels GC

VOC-Messungen wurden gemäß DIN EN ISO 11890-2 "Beschichtungsstoffe- Bestimmung des Gehaltes an flüchtigen organischen Verbindungen (VOC-Gehalt)" nach einem gaschromatographischen Verfahren durchgeführt, wobei Tetradecan mit einem Siedepunkt von 251 °C bei Normalbedingungen als Markersubstanz verwendet wurde. Als VOC gelten alle Verbindungen, deren Retentionszeiten unterhalb derjenigen der Markersubstanz liegen. Der VOC-Gehalt wurde rechnerisch aus den Peakflächen ermittelt und stellt den Massenanteil der flüchtigen organischen Bestandteile in Prozent bezogen auf die Gesamtmasse der untersuchten Probe dar.

### Anmischen des Baustoffes (Baustoffmischung):

Die Herstellung einer Mischung erfolgte in Anlehnung an DIN EN 206-1. Zement, ggf. Zusatzstoffe, Zusatzmittel und Gesteinskömung wurden in einem Mischer z.B. Tellermischer, vorgemischt. Nach erfolgter Wasserzugabe sowie nach anschließender Zugabe von Fließmittel bzw. Betonverflüssiger wurde jeweils erneut gemischt.

### Bestimmung der Konsistenz der frischen Baustoffmischung:

Das Ausbreitmaß wurde nach DIN EN 12350-5 oder nach DIN EN 13395-1 ermittelt. Die Bestimmung des Fließmaßes wurde in Anlehnung an DIN EN 12350-8 durchgeführt. Anstelle des "Setzttrichters" wurde ein "Hägermannkonus" verwendet. Weitere angewendete Methoden sind in der DAfStb-Richtlinie "Herstellung und Verwendung von zementgebundenem Vergussbeton und Vergussmörtel" beschrieben.

### Bestimmung des Luftporengehaltes der frischen Baustoffmischung:

Der Luftporengehalt wurde in Anlehnung an DIN EN 12350-7 bestimmt. Das Volumen des Luftgehaltprüfgeräts betrug 1 Liter oder 5 Liter.

### Bestimmung des Frühschwindens:

Schwind- und Dehnvorgänge in den Baustoffproben während des Abbindevorgangs wurden mittels Schwindrinne gemessen. In eine Metallrinne aus nicht rostendem Edelstahl wird Frischmörtel eingefüllt. Ein beweglich gelagerter Stempel auf der einen Seite der Rinne überträgt die Längenänderung auf einen hochempfindlichen Messaufnehmer. Am anderen Ende der Rinne befindet sich ein Widerhaken, der die Probe an der Rinnenwand festhält. Ein ebensolcher Haken befindet sich am Aufnehme-Stempel. Die Probe ist in der Rinne nahezu reibungsfrei gelagert.

### Bestimmung des Langzeitschwindens der festen Baustoffmischung:

Das Schwinden wurde nach DIN 52450 (1985) durchgeführt. Die Altemativmethode lehnt sich an diese Norm an. Der Unterschied besteht darin, dass Prüfkörper mit den Maßen 100 mm x 100 mm x 500 mm und entsprechende Prüfgeräte verwendet wurden.

### Bestimmung der Druck- und Biegezugfestigkeiten der festen Baustoffmischung:

Die Druck- und Biegezugfestigkeiten wurden nach DIN EN 12390-3, DIN EN 12390-5, DIN EN 196-1 bzw. DIN EN 13892-2 geprüft.

### Synthesebeispiele der Schwindreduzierer:

### Beispiel 1:

### Herstellung eines Polyoxyalkylens aus 3,5,5-Trimethylhexansäure und 8 mol PO

In einem 5 Liter Autoklaven wurden 806 g 3,5,5-Trimethylhexansäure und 18,5 g KOH vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen und mit Stickstoff inertisiert. 2367 g Propylenoxid wurden innerhalb von 4 h bei 130 °C Innentemperatur und einem Innendruck von 3 bis 4 bar (absolut) zudosiert. Nach 1,5 h Nachreaktion bei 130 °C wurden flüchtige Anteile im Vakuum bei 130 °C destillativ entfernt. Das Alkoxylierungsprodukt wurde auf unter 90 °C abgekühlt, mit Phosphorsäure neutralisiert und über einen Filter aus dem Reaktor abgelassen. Das Produkt war fast farblos und bei Raumtemperatur niedrig viskos. Die OH-Zahl war 101 mg KOH/g, die Säurezahl 0,1 mg KOH/g. Gemäß GPC-Analyse weist das Produkt eine gewichtsmittlere Molmasse M_{w} von 680 g/mol und eine Polydispersität M_{w}/Mₙ von 1,11. auf.

### Beispiel 2:

### Herstellung eines Polyoxyalkylens aus 3,5,5-Trimethylhexansäure und 12 mol EO

In einem 5 Liter Autoklaven wurden 806 g 3,5,5-Trimethylhexansäure und 12,5 g KOH vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen und mit Stickstoff inertisiert. 2689 g Ethylenoxid wurden innerhalb von 2 h 40 min bei 160 °C Innentemperatur und einem Innendruck von max. 4,5 bar (absolut) zudosiert. Nach 1 h Nachreaktion bei 160 °C wurden flüchtige Anteile im Vakuum bei 160 °C destillativ entfernt. Das Alkoxylierungsprodukt wurde auf unter 90 °C abgekühlt, mit Phosphorsäure neutralisiert und über einen Filter aus dem Reaktor abgelassen. Das Produkt war fast farblos und bei Raumtemperatur niedrig viskos. Die OH-Zahl war 88,5 mg KOH/g, die Säurezahl 0,3 mg KOH/g. Gemäß GPC-Analyse weist das Produkt eine gewichtsmittlere Molmasse M_{w} von 680 g/mol und eine Polydispersität M_{w}/Mₙ von 1,12. auf.

### Beispiel 3:

### Herstellung eines Polyoxyalkylens aus Neodecansäure und 8 mol EO

In einem 5 Liter Autoklaven wurden 689 g Neodecansäure und 3,6 g Kalilauge (45 %) vorgelegt und unter Rühren auf 130 °C aufgeheizt. Der Reaktor wurde bis auf einen Innendruck von 30 mbar evakuiert, um evtl. vorhandene flüchtige Inhaltsstoffe destillativ zu entfernen und mit Stickstoff inertisiert. 1408 g Ethylenoxid wurden innerhalb von 3,5 h bei 170 °C Innentemperatur und einem Innendruck von max. 4,5 bar (absolut) zudosiert. Nach 0,5 h Nachreaktion bei 170 °C wurden flüchtige Anteile im Vakuum destillativ entfernt. Das Alkoxylierungsprodukt wurde auf unter 90 °C abgekühlt, mit Milchsäure neutralisiert und über einen Filter aus dem Reaktor abgelassen. Das Produkt war fast farblos und bei Raumtemperatur niedrig viskos. Die OH-Zahl war 101,9 mg KOH/g, die Säurezahl 0,1 mg KOH/g. Gemäß GPC-Analyse weist das Produkt eine gewichtsmittlere Molmasse M_{w} von 540 g/mol und eine Polydispersität M_{w}/Mₙ von 1,09. auf.

### Beispiel 4:

### Herstellung eines Polyoxyalkylens aus 3,5,5-Trimethylhexansäure, 8 mol PO und 8 mol EO

Herstellung gemäß Beispiel 1, mit dem Unterschied, dass im Autoklaven 403 g 3,5,5-Trimethylhexansäure und 5,8 g Kaliummethanolat vorgelegt und bei 130 °C eine homogene Mischung aus 1182 g Propylenoxid und 897 g Ethylenoxid zudosiert wurde. Das mit Phosphorsäure neutralisierte Alkoxylierungsprodukt war fast farblos und bei Raumtemperatur niedrig viskos. Die OH-Zahl war 58,2 mg KOH/g, die Säurezahl 0,2 mg KOH/g. Gemäß GPC-Analyse weist das Produkt eine gewichtsmittlere Molmasse M_{w} von 935 g/mol und eine Polydispersität M_{w}/Mₙ von 1,12 auf.

### Beispiel 5:

### Herstellung eines Polyoxyalkylens aus Benzoesäure und 5 mol EO und 5 mol PO

Herstellung gemäß Beispiel 1, mit dem Unterschied, dass im Autoklaven 488 g Benzoesäure und 7,5 g Natriummethanolat vorgelegt und bei 130 °C zunächst 880 Ethylenoxid und anschließend 1160 g Propylenoxid zudosiert wurde. Das mit Phosphorsäure neutralisierte blockartig aufgebaute Alkoxylierungsprodukt war leicht gelblich und bei Raumtemperatur niedrig viskos. Die OH-Zahl war 90,1 mg KOH/g, die Säurezahl 0,1 mg KOH/g. Gemäß GPC-Analyse weist das Produkt eine gewichtsmittlere Molmasse M_{w} von 610 g/mol und eine Polydispersität M_{w}/Mₙ von 1,14 auf.

### Beispiel 6:

### Herstellung eines Polyoxyalkylens aus Ölsäure und 12 mol EO

Herstellung gemäß Beispiel 3, mit dem Unterschied, dass im Autoklaven 561 g Ölsäure und 2,5 g Kalilauge (45 %) vorgelegt und bei 150 °C 1056 g Ethylenoxid zudosiert wurde. Das nicht neutralisierte Alkoxylierungsprodukt war bräunlich und bei Raumtemperatur niedrig viskos. Die OH-Zahl war 71,3 mg KOH/g, die Säurezahl 0,0 mg KOH/g. Gemäß GPC-Analyse weist das Produkt eine gewichtsmittlere Molmasse M_{w} von 785 g/mol und eine Polydispersität M_{w}/Mₙ von 1,16 auf.

### Beispiel 7:

### Herstellung eines Pulvers in geträgerter Form

In der Rührschüssel eines Intensivmischers (z.B. der Fa. Eirisch) wurden 333 g Kieselsäure vorgelegt und 67 g des Polyoxyalkylens nach Beispiel 1 (3,5,5-Trimethylhexansäure + 8 PO) vorgelegt. Anschließend wurde für 5 Minuten bei 2000 UPM gemischt.

### Untersuchung des VOC Gehalts:

Die reinen Polyoxyalkylene wurden nach dem beschriebenen Schnelltest gaschromatographisch auf ihren VOC-Gehalt analysiert.

**Tabelle 1: VOC-Gehalt von Schwindreduzierern**

| Beispiel | Schwind reduzierer | VOC relativ zu Hexylenglykol (%) |
|---|---|---|
| (nicht erfindungsgemäß) | Hexylenglykol | 100 |
| (nicht erfindungsgemäß) | Neopentylglykol | 100 |
| 1 | 3,5,5-Trimethylhexansäure + 8 PO | 0,29 |
| 2 | 3,5,5-Trimethylhexansäure + 12 EO | <0,1 |
| 3 | Neodecansäure + 8 EO | <0,1 |
| 4 | 3,5,5-Trimethylhexansäure + 8 PO/ 8 EO | <0,1 |
| 5 | Benzoesäure + 5 EO + 5 PO | 0,2 |
| 6 | Ölsäure + 12 EO | <0,1 |

Von ausgewählten Proben wurden nach GEV Verfahren Prüfkammertests (wie oben beschrieben) von Mörtelproben, modifiziert mit verschiedenen Schwindreduzierern durchgeführt. Die Dosierung betrug 0,3 % Wirkstoff bezogen auf den Gesamtmörtel.

Für die Bewertung von VOC-Emissionen wird der sog. TVOC-Wert (total volatile organic content; Retentionsbereich C6 - C16) herangezogen und in Toluol Äquivalenten angegeben.

**Tabelle 2: TVOC-Werte von Mörtelproben mit Schwindreduzierern im Prüfkammertest nach GEV Verfahren**

| | TVOC am 3. Tag | TVOC am 28. Tag |
|---|---|---|
| Herkömmlicher Schwindreduzierer Neopentylglykol | 3710 µg/m³ | 1980 µg/m³ |
| Erfindungsgemäße Verbindung Beispiel 1 | 50 µg/m³ | < 10 µg/m³ |
| Grenzwert nach GEV-Kriterien*: | | |
| z.B. EC1^{plus} | ≤ 750 µg/m³ | ≤ 60 µg/m³ |
| z.B. EC1 | ≤ 1000 µg/m³ | ≤ 100 µg/m³ |
| z.B. EC2 | ≤ 3000 µg/m³ | ≤ 300 µg/m³ |

| | | |
|---|---|---|
| * für Produktgruppe 1: Mineralische Produkte. | | |

Der herkömmliche Schwindreduzierer erfüllt keines der GEV-Kriterien, die zur Zeit den Stand der Technik für emissionsarme Baustoffe darstellen. Im Gegensatz dazu unterschreitet der Mörtel mit dem erfindungsgemäßen Schwindreduzierer (Beispiel 1) die GEV-Kriterien um ein Vielfaches. Die weiteren erfindungsgemäßen Verbindungen gemäß Beispielen 2 bis 7 erzielen vergleichbar niedrige TVOC Werte.

Die Feststellung der schwindreduzierenden Eigenschaften der erfindungsgemäßen Substanzen wurde an einer Baustoffmischungsrezeptur u.a. bestehend aus 330 kg/m³ Zement, 1700 kg/m³ Gesteinsmehl und -kömung sowie 210 kg Wasser durchgeführt. Der Unterschied zwischen den Vergleichsmischungen bestand lediglich in der schwindreduzierenden Komponente.

**Tabelle 3: Kennwerte der frischen und festen Baustoffmischung:**

| | MISCHUNG | | | | | | |
|---|---|---|---|---|---|---|---|
| | A | B | C | D | E | F | G |
| Schwindreduzierer (SR) | ohne | Neopentylglycol | Hexylenglycol | aus Bsp. 1 | aus Bsp. 2 | aus Bsp. 3 | aus Bsp. 4 |
| Dosierung SR [Gew.-% v. Zement] | -- | 2,0 % | 2,0 % | 2,0 % | 2,0 % | 2,0 % | 2,0 % |
| Fließmaß n. 5 min | 235 mm | 240 mm | 230 mm | 225 mm | 230 mm | 240 mm | 230 mm |
| Druckfestigkeit n. 28d | 34,8 MPa | 34,5 MPa | 33,7 MPa | 39,2 MPa | 31,1 MPa | 33,4 MPa | 35,7 MPa |

**Tabelle 4: Frühschwindwerte: Die Angaben sind normiert auf die Referenzmischung. Die Werte der Referenzmischung betragen definitionsgemäß zu jedem Messzeitpunkt 100%. Ein Wert kleiner als 100% bedeutet, dass das Schwinden dieser Mischung geringer war als die Referenzmischung.**

| | A | B | C | D | E | F | G |
|---|---|---|---|---|---|---|---|
| 1h | 100% | 30,0% | 32,9% | 12,9% | 25,7% | 100,4% | 28,6% |
| 5h | 100% | 26,0% | 41,0% | 25,3% | 76,4% | 85,5% | 24,9% |
| 10h | 100% | 35,4% | 20,2% | 59,4% | 64,2% | 65,0% | 21,9% |
| 15h | 100% | 68,8% | 26,8% | 42,7% | 76,3% | 41,3% | 33,8% |
| 20h | 100% | 77,8% | 58,1% | 43,2% | 69,2% | 46,1% | 42,6% |
| 24h | 100% | 78,3% | 65,7% | 43,2% | 67,8% | 47,0% | 44,6% |
| 32h | 100% | 78,6% | 67,3% | 42,9% | 67,5% | 46,8% | 44,8% |
| 48h | 100% | 77,6% | 67,0% | 42,3% | 66,7% | 46,2% | 44,8% |

**Tabelle 5: Langzeitschwindwerte nach Graf-Kaufmann**

| | A [mm/m] | B [mm/m] | C [mm/m] | D [mm/m] | E [mm/m] | F [mm/m] | G [mm/m] |
|---|---|---|---|---|---|---|---|
| 1d | -0,253 | -0,247 | -0,169 | -0,051 | -0,182 | -0,140 | -0,044 |
| 5d | -0,476 | -0,333 | -0,300 | -0,218 | n.d. | -0,316 | -0,227 |
| 7d | n.d. | -0,393 | -0,333 | -0,278 | -0,391 | -0,407 | -0,284 |
| 14d | -0,589 | -0,473 | -0,422 | -0,351 | n,d, | -0,491 | -0,364 |
| 21d | -0,633 | -0,498 | -0,460 | -0,376 | -0,511 | -0,511 | -0,387 |
| 28d | -0,638 | -0,507 | -0,496 | -0,391 | -0,516 | -0,531 | -0,402 |
| 56d | -0,688 | -0,520 | -0,498 | -0,451 | n.d. | -0,563 | -0,470 |

Die schwindreduzierenden Eigenschaften der erfindungsgemäßen Verbindungen wurden in einer weiteren Baustoffformulierung getestet (Tabelle 6), die sich wie folgt zusammensetzte: 647 kg/m³ Zement, 260 kg/m³ Gesteinsmehl, 1293 kg/m³ Sand der Körnung 0-2 mm und 453 kg/m³ Wasser. Als Referenz dienten Mischungen ohne Schwindreduzierer sowie mit Neopentylglycol. Das Schwinden wurde nach DIN 52450 (1985) an Prüfkörpern mit den Abmessungen 400 mm x 400 mm x 1600 mm durchgeführt.

**Tabelle 6: Langzeitschwindwerte nach DIN 52450 (1985)**

| | ohne SR [mm/m] | Neopentylglycol [mm/m] | aus Bsp. 1 [mm/m] | aus Bsp. 2 [mm/m] | aus Bsp. 4 [mm/m] |
|---|---|---|---|---|---|
| 1d | -0,10 | -0,09 | -0,05 | -0,12 | -0,06 |
| 7d | -0,44 | -0,30 | -0,25 | -0,35 | -0,15 |
| 14d | -0,76 | -0,38 | -0,39 | -0,40 | -0,30 |
| 21d | -0,89 | -0,58 | -0,50 | -0,60 | -0,51 |
| 28d | -1,00 | -0,62 | -0,65 | -0,70 | -0,55 |
| 56d | -1,15 | -0,72 | -0,65 | -0,72 | -0,62 |

## Patentansprüche

1. Verwendung von Polyoxyalkylenen der Formel (I) als schwindreduzierende Mittel für mineralische Bindemittel und daraus hergestellte Baustoffe, 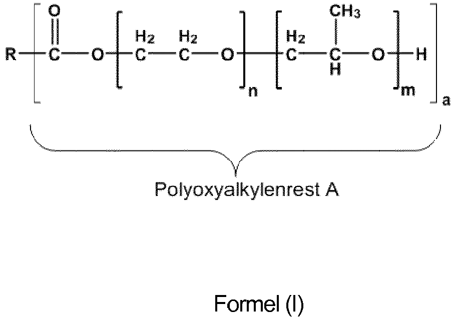 wobei
R unabhängig voneinander ein a-valenter, linearer oder verzweigter, gesättigter, einfach oder mehrfach ungesättigter aliphatischer, cycloaliphatischer oder aromatischer Kohlenwasserstoffrest mit 3 bis 38 Kohlenstoffatomen ist, wobei der Kohlenwasserstoffrest mit a Polyoxyalkylenresten A substituiert ist,
a = 1 bis 4,
n = 0 bis 40,
m = 0 bis 40,
mit der Maßgabe, dass
die Summe aus n und m = 4 bis 80 ist, wobei die mit n und m bezeichneten Einheiten wahlweise blockartig oder statistisch in der Polyetherkette verteilt sind und die mit n und m bezeichneten Einheiten die Mittelwerte der möglichen statistischen Verteilung der tatsächlichen vorhandenen Strukturen darstellen.

2. Verwendung nach Anspruch 1 **dadurch gekennzeichnet, dass** in Formel (I) der Rest R unabhängig voneinander ein aliphatischer Kohlenwasserstoffrest mit 3 bis 38 Kohlenstoffatomen, bevorzugt mit 5 bis 17 Kohlenstoffatomen ist, wobei die Kohlenstoffkette mit 1 oder 2 Polyoxyalkylenresten A terminal substituiert ist und a gleich der Anzahl der Polyoxyalkylenreste A 1 oder 2 ist.

3. Verwendung nach einem der Ansprüche 1 oder 2 **dadurch gekennzeichnet, dass** sich die Reste R von einer Fettsäure oder einer Dimerfettsäure ableiten.

4. Verwendung nach einem der Ansprüche 1 bis 3 **dadurch gekennzeichnet, dass** sich die Reste R ableiten von Hexansäure, Heptansäure, Octansäure, Nonansäure, Decansäure, Undecansäure, Dodecansäure, Tridecansäure, Tetradecansäure, Pentadecansäure, Hexadecansäure, Heptadecansäure, Octadecansäure, Nonadecansäure, Icosansäure, 2-Ethylhexancarbonsäure, Isononansäure, 3,5,5-Trimethylhexancarbonsäure, Neodecansäure, Isotridecancarbonsäure, Isostearinsäure, Undecylensäure, Ölsäure, Linolsäure, Ricinolsäure, Linolensäure, Benzoesäure, Zimtsäure, Phthalsäure, Isophthalsäure, Terephthalsäure, Cyclohexancarbonsäure, Hexahydrophthalsäure, Tetrahydrophtalsäure, Methyltetrahydrophthalsäure oder den sich von den vorab genannten ungesättigten Carbonsäuren ableitenden Dimerfettsäuren.

5. Verwendung nach einem der Ansprüche 1 bis 4 **dadurch gekennzeichnet, dass** in Formel (I) a kleiner als 3, bevorzugt 1 ist.

6. Verwendung nach einem der Ansprüche 1 bis 5 **dadurch gekennzeichnet, dass** in Formel (I) m = 2 bis 30, bevorzugt 4 bis 20 ist und n = 2 bis 30, bevorzugt 4 bis 20 ist und die Summe aus n und m 6 bis 40, bevorzugt 8 bis 20 ist.

7. Verwendung nach einem der Ansprüche 1 bis 6 **dadurch gekennzeichnet, dass** die Polyoxyalkylene der Formel (I) eine gewichtsmittlere Molmasse von 300 bis 15.000 g/mol, bevorzugt von 400 bis 5.000 g/mol und besonders bevorzugt von 500 bis 2.500 g/mol aufweisen.

8. Verwendung nach einem der Ansprüche 1 bis 7 **dadurch gekennzeichnet, dass** die Polyoxyalkylene der Formel (I) auf einem Träger aufgezogen sind.

9. Verfahren zur Schwindreduktion von Baustoffen, die mineralische Bindemittel, insbesondere zementöse Bindemittel, enthalten, bevorzugt von Mörtel, Estrich, Beton oder Schlämmen, **dadurch gekennzeichnet, dass** einem nicht gehärteten Baustoffgemisch mindestens ein Polyoxyalkylen der Formel (I) gemäß den Vorgaben der Ansprüche 1 bis 8 zugegeben wird.

10. Verfahren nach Anspruch 9 **dadurch gekennzeichnet, dass** das Polyoxyalkylen der Formel (I) dem Baustoffgemisch in einer Menge von 0,001 - 6,0 Gew.-%, bevorzugt in einer Menge von 0,1 bis 3 Gew.-%, bezogen auf das Trockengewicht des mineralischen Bindemittels zugegeben wird.

11. Verfahren nach Anspruch 9 oder 10 **dadurch gekennzeichnet, dass** das Baustoffgemisch übliche Zusatzmittel und/oder Zusatzstoffe und/oder Gesteinskömung enthält.

12. Verfahren nach einem der Ansprüche 9 bis 11 **dadurch gekennzeichnet, dass**
i) das mindestens eine Polyoxyalkylen der Formel (I), mineralische Bindemittel, Zusatzmittel, Zusatzstoffe und/oder Gesteinskömung ohne Zugabe von Wasser vermischt werden und der so erhaltenen Vormischung zu einem späteren Zeitpunkt Wasser zugegeben wird, oder
ii) die Einzelkomponenten zusammen mit Wasser gemischt werden.

13. Verfahren nach einem der Ansprüche 9 bis 12, **dadurch gekennzeichnet, dass** das mindestens eine Polyoxyalkylen der Formel (I) während des Herstellungs- oder Förderprozesses des Baustoffs mit dem mineralischen Bindemittel und/oder dem Gesteinsmehl vermischt wird.

14. Baustoffzusammensetzung umfassend
i) mindestens ein mineralisches Bindemittel, bevorzugt ein zementöses Bindemittel, und
ii) mindestens ein Polyoxyalkylen der Formel (I) gemäß den Vorgaben aus einem der Ansprüche 1 bis 8.

## Claims

1. Use of polyoxyalkylenes of the formula (I) as shrinkage-reducing agents for mineral binders and building materials produced therefrom, 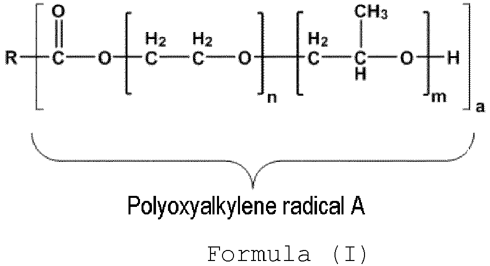 where
R is independently an a-valent, linear or branched, saturated, monounsaturated or polyunsaturated, aliphatic, cycloaliphatic or aromatic hydrocarbyl radical having 3 to 38 carbon atoms, where the hydrocarbyl radical is substituted by a polyoxyalkylene radicals A,
a = 1 to 4,
n = 0 to 40,
m = 0 to 40,
with the proviso that
the sum total of n and m = 4 to 80, where the units that n and m refer to are distributed in the polyether chain either in blocks or randomly and the units that n and m refer to constitute the mean values of the possible statistical distribution of the actual structures present.

2. Use according to Claim 1, **characterized in that**, in formula (I), the R radical is independently an aliphatic hydrocarbyl radical having 3 to 38 carbon atoms, preferably having 5 to 17 carbon atoms, where the carbon chain is terminally substituted by 1 or 2 polyoxyalkylene radicals A and a is the number of polyoxyalkylene radicals A and is 1 or 2.

3. Use according to either of Claims 1 and 2, **characterized in that** the R radicals derive from a fatty acid or a dimer fatty acid.

4. Use according to any of Claims 1 to 3, **characterized in that** the R radicals derive from hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, 2-ethylhexanecarboxylic acid, isononanoic acid, 3,5,5-trimethylhexanecarboxylic acid, neodecanoic acid, isotridecanecarboxylic acid, isostearic acid, undecylenoic acid, oleic acid, linoleic acid, ricinoleic acid, linolenic acid, benzoic acid, cinnamic acid, phthalic acid, isophthalic acid, terephthalic acid, cyclohexanecarboxylic acid, hexahydrophthalic acid, tetrahydrophthalic acid, methyltetrahydrophthalic acid or the dimer fatty acids that derive from the aforementioned unsaturated carboxylic acids.

5. Use according to any of Claims 1 to 4, **characterized in that**, in formula (I), a is less than 3, preferably 1.

6. Use according to any of Claims 1 to 5, **characterized in that**, in formula (I), m = 2 to 30, preferably 4 to 20, and n = 2 to 30, preferably 4 to 20, and the sum total of n and m is 6 to 40, preferably 8 to 20.

7. Use according to any of Claims 1 to 6, **characterized in that** the polyoxyalkylenes of the formula (I) have a weight-average molar mass of 300 to 15 000 g/mol, preferably of 400 to 5000 g/mol and more preferably of 500 to 2500 g/mol.

8. Use according to any of Claims 1 to 7, **characterized in that** the polyoxyalkylenes of the formula (I) have been applied to a support.

9. Method of reducing shrinkage of building materials comprising mineral binders, especially cementitious binders, preferably of mortar, screed, concrete or slurries, **characterized in that** at least one polyoxyalkylene of the formula (I) according to the provisions of Claims 1 to 8 is added to an unhardened building material mixture.

10. Method according to Claim 9, **characterized in that** the polyoxyalkylene of the formula (I) is added to the building material mixture in an amount of 0.001%-6.0% by weight, preferably in an amount of 0.1% to 3% by weight, based on the dry weight of the mineral binder.

11. Method according to Claim 9 or 10, **characterized in that** the building material mixture comprises customary admixtures and/or additives and/or aggregate.

12. Method according to any of Claims 9 to 11, **characterized in that**
i) the at least one polyoxyalkylene of the formula (I), mineral binders, admixtures, additives and/or aggregate are mixed without addition of water and water is added to the premix thus obtained at a later juncture, or
ii) the individual components are mixed together with water.

13. Method according to any of Claims 9 to 12, **characterized in that** the at least one polyoxyalkylene of the formula (I) is mixed with the mineral binder and/or the rock flour during the process of production or delivery of the building material.

14. Building material composition comprising
i) at least one mineral binder, preferably a cementitious binder, and
ii) at least one polyoxyalkylene of the formula (I) according to the provisions from one of Claims 1 to 8.

## Revendications

1. Utilisation de polyoxyalkylènes de formule (I) en tant qu'agents de réduction du retrait pour des liants minéraux et des matériaux de construction préparés à partir de ceux-ci, 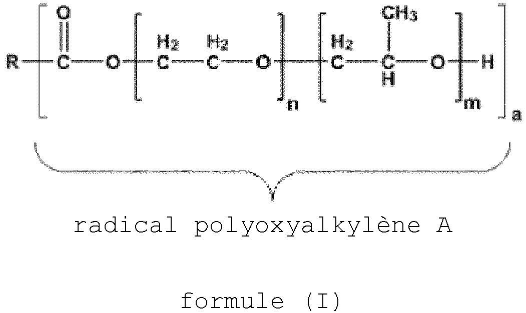
R indépendamment les uns des autres étant un radical hydrocarboné α-valent, linéaire ou ramifié, saturé, insaturé une ou plusieurs fois, aliphatique, cycloaliphatique ou aromatique comportant 3 à 38 atomes de carbone, le radical hydrocarboné étant substitué par a radicaux polyoxyalkylène A,
a = 1 à 4,
n = 0 à 40,
m = 0 à 40,
étant entendu que
la somme de n et m = 4 à 80, les motifs désignés par n et m sont répartis dans la chaîne polyéther au choix en blocs ou statistiquement et les motifs désignés par n et m représentent les valeurs moyennes de la répartition statistique possible des structures effectivement présentes.

2. Utilisation selon la revendication 1, **caractérisée en ce que**, dans la formule (I), le radical R indépendamment les uns des autres est un radical hydrocarboné aliphatique comportant 3 à 38 atomes de carbone, préférablement comportant 5 à 17 atomes de carbone, la chaîne carbonée étant substituée en position terminale par 1 ou 2 radicaux polyoxyalkylène A et a étant égal au nombre de radicaux polyoxyalkylène A 1 ou 2.

3. Utilisation selon l'une quelconque des revendications 1 et 2, **caractérisée en ce que** les radicaux R sont issus d'un acide gras ou d'un acide gras dimère.

4. Utilisation selon l'une quelconque des revendications 1 à 3, **caractérisée en ce que** les radicaux R sont issus de l'acide hexanoïque, de l'acide heptanoïque, de l'acide octanoïque, de l'acide nonanoïque, de l'acide décanoïque, de l'acide undécanoïque, de l'acide dodécanoïque, de l'acide tridécanoïque, de l'acide tétradécanoïque, de l'acide pentadécanoïque, de l'acide hexadécanoïque, de l'acide heptadécanoïque, de l'acide octadécanoïque, de l'acide nonadécanoïque, de l'acide icosanoïque, l'acide 2-éthylhexanoïque, de l'acide isononaoïque, de l'acide 3,3,5-triméthylhexanoïque, de l'acide néodécanoïque, de l'acide isotridécanoïque, de l'acide isostéarique, de l'acide undécylénique, de l'acide oléique, de l'acide linoléique, de l'acide ricinoléique, de l'acide linolénique, de l'acide benzoïque, de l'acide cinnamique, de l'acide phtalique, de l'acide isophtalique, de l'acide téréphtalique, de l'acide cyclohexanecarboxylique, de l'acide hexahydrophtalique, de l'acide tétrahydrophtalique, de l'acide méthyltétrahydrophtalique ou des acides gras dimères issus des acides carboxyliques insaturés mentionnés précédemment.

5. Utilisation selon l'une quelconque des revendications 1 à 4, **caractérisée en ce que** dans la formule (I), a est plus petit que 3, préférablement vaut 1.

6. Utilisation selon l'une quelconque des revendications 1 à 5, **caractérisée en ce que** dans la formule (I), m = 2 à 30, préférablement vaut de 4 à 20 et n = 2 à 30, préférablement vaut de 4 à 20 et la somme de n et m est de 6 à 40, préférablement vaut de 8 à 20.

7. Utilisation selon l'une quelconque des revendications 1 à 6, **caractérisée en ce que** les polyoxyalkylènes de la formule (I) présente une masse moléculaire moyenne en poids de 300 à 15 000 g/mole, préférablement de 400 à 5000 g/mole et particulièrement préférablement de 500 à 2500 g/mole.

8. Utilisation selon l'une quelconque des revendications 1 à 7, **caractérisée en ce que** les polyoxyalkylènes de la formule (I) sont montés sur un support.

9. Procédé pour la réduction du retrait de matériaux de construction, qui contiennent des liants minéraux, en particulier des liants cimentaires, préférablement de mortier, d'enduit, de béton ou de boues, **caractérisé en ce qu'**on ajoute au moins un polyoxyalkylène de formule (I) selon les dispositions des revendications 1 à 8 à un mélange de matériaux de construction non durci.

10. Procédé selon la revendication 9, **caractérisé en ce que** le polyoxyalkylène de formule (I) est ajouté au mélange de matériaux de construction en une quantité de 0,001 à 6,0 % en poids, préférablement en une quantité de 0,1 à 3 % en poids, par rapport au poids sec du liant minéral.

11. Procédé selon la revendication 9 ou 10, **caractérisé en ce que** le mélange de matériaux de construction contient des adjuvants et/ou des additifs et/ou des granulats habituels.

12. Procédé selon l'une quelconque des revendications 9 à 11, **caractérisé en ce que**
i) l'au moins un polyoxyalkylène de formule (I), des liants minéraux, des adjuvants, des additifs et/ou des granulats sont mélangés sans ajout d'eau et de l'eau est ajoutée ultérieurement au prémélange ainsi obtenu, ou
ii) les composants individuels sont mélangés ensemble avec de l'eau.

13. Procédé selon l'une quelconque des revendications 9 à 12, **caractérisé en ce que** l'au moins un polyoxyalkylène de formule (I) est mélangé avec le liant minéral et/ou avec la farine de pierre pendant le procédé de préparation ou le procédé de transport du matériau de construction.

14. Composition de matériaux de construction comprenant
i) au moins un liant minéral, préférablement un liant cimentaire, et
ii) au moins un polyoxyalkylène de formule (I) selon les dispositions d'une quelconque des revendications 1 à 8.
